# FASCICULE DE BREVET EUROPEEN

(11) **EP 2 090 629 B1**
(45) Date de publication et mention de la délivrance du brevet: **06.06.2012**
(21) Numéro de dépôt: 09151589.0
(22) Date de dépôt: 29.01.2009
(51) Int. Cl.: C09J 5/02

(54) **Utilisation d'un promoteur d'adhérence dans une solution de nettoyage**
Verwendung eines Haftvermittlers in einer Reinigungslösung
Use of an adhesion promotor in a cleaning solution

(30) Priorité: 15.02.2008 FR 0850985
(43) Date de publication de la demande: 19.08.2009
(73) Titulaire: ARKEMA FRANCE, 92700 Colombes (FR)
(72) Inventeur: D'Herbecourt, Bruno, 27300 BERNAY (FR); Eustache, René-Paul, 27170 COMBON (FR)

(56) Documents cités:
- EP-B1- 0 409 120
- WO-A-2007/083072

## Description

### Domaine de l'invention:

La présente invention concerne l'assemblage par collage d'un premier substrat S1 à base d'élastomère thermoplastique (abrégé TPE) et / ou de polyamide (PA) homopolymère ou copolymère, et d'un second substrat S2, les substrats S1 et S2 pouvant être de même nature ou de nature différente.

Par la suite, on nomme (TPE-PA) ces différentes possibilités de composition pour le substrat S1 et éventuellement pour le substrat S2 s'il est de même nature. Aussi, par substrat (TPE-PA), on entend un substrat qui comprend au moins un élastomère TPE ou bien au moins un PA, ou encore un mélange d'au moins un TPE et d'au moins un PA.

La présente invention concerne également un produit stratifié formé par l'assemblage de tels substrats S1 et S2 au moyen d'un joint de colle aqueux (J).

Par joint de colle aqueux, on entend un joint dans lequel des compositions de primaires et/ou de colles aqueuses utilisées en couches successives sur les substrats en (TPE-PA) comprennent moins de 5% de solvants organiques.

La présente invention concerne également un procédé de fabrication d'un tel stratifié et son utilisation dans l'industrie de la chaussure, notamment pour l'assemblage d'éléments constitutifs de semelles et tout particulièrement de semelles de chaussures de sport.

### Technique antérieure:

Un des principaux savoir-faire de l'industrie de la chaussure réside dans une bonne maîtrise des techniques de collage destinées à assembler des matériaux de nature chimique et de propriétés mécaniques différentes. Ce savoir-faire est particulièrement important dans le domaine de la chaussure de sport où les matériaux utilisés, notamment pour la fabrication des semelles, sont fréquemment des matériaux nouveaux. Cette exigence est décuplée par la recherche de la performance généralement liée à la chaussure de sport.

Durant la dernière décennie certains matériaux à base de TPE et/ou de PA, tels que les matériaux commercialisés par la société Arkéma sous la marque Pébax® ou Rilsan®, se sont progressivement imposés dans le domaine de la chaussure haut de gamme, en particulier de sport, grâce à leurs propriétés mécaniques et notamment leur propriété de retour élastique exceptionnel.

Les substrats faits de ces matériaux en copolymère polyamide-bloc-polyéther, notamment pour la fabrication de semelles de chaussures de sport, sont généralement assemblés par collage à d'autres substrats au moyen d'un joint de colle.

De manière générale, le collage de ce type de substrat pour réaliser un stratifié nécessite au moins les opérations suivantes :
- le nettoyage des surfaces des substrats à coller, par exemple avec un solvant organique telle que la méthyléthylcétone (MEK) ou bien avec une solution détergente à base aqueuse ;
- l'application, généralement au pinceau, sur au moins la surface d'accostage du substrat S1 (TPE-PA), d'une couche de joint de colle solvanté ou aqueux, pouvant éventuellement comprendre l'application d'un primaire généralement solvanté.
- L'accostage des deux substrats; et
- La mise sous presse de l'ensemble résultant de l'accostage.

Lors de ce collage, tant les compositions de primaire que les colles de l'art antérieur, conduisent à une évaporation d'une grande quantité de solvant organique. Ainsi, dans le cas de la fabrication d'un stratifié pour chaussure, on estime que la quantité moyenne de colle utilisée pour une chaussure est de 5g et celle de composition de primaire de 3g, et on peut évaluer l'émission de solvant à 2,9g par chaussure. En admettant une production de 10 000 chaussures par jour pour une unité de production, la quantité totale de solvant émis par cette unité est de 29 kg par jour.

L'utilisation d'un joint de colle à base aqueuse permet de diminuer cet inconvénient. Malheureusement, les niveaux d'adhérence et la qualité du collage, exprimée par la force de pelage des substrats à base de (TPE-PA), des systèmes de l'art antérieur est loin d'être optimale. Ainsi, avec des substrats en copolymère polyamide-bloc-polyéther de dureté 55 à 70 Shore D en moyenne (par exemple Pébax® 55 -1, Pébax® 70 -1) on obtient des forces de pelage faibles comprises entre environ 0.5 et 3 kg/cm. Or, les fabricants de chaussure imposent une résistance au pelage supérieure à 3kg/cm. En général, les joints de colle aqueux collent très difficilement, et dans la majorité des cas ils ne collent même pas du tout sur les substrats (TPE-PA), avec lesquels ils sont peu ou pas compatibles.

Des efforts ont été faits afin d'améliorer l'adhérence sur les substrats (TPE-PA) par incorporation de polymères promoteur d'adhérence telles que des silanes dans les formulations des primaires ou des colles.

Le document WO2007083072 décrit l'utilisation de butanediol pour activer l'adhérence des joints de colle aqueux (primaire d'adhésion ou colle) sur des supports en polymères thermoplastiques. Toutefois, le temps d'activation ne dure que quelques minutes après application du butanediol sur le substrat et lorsque ce temps d'activation est expiré, la colle ne peut plus réagir avec le substrat. C'est pourquoi il est préférable d'utiliser ce type de promoteur en combinaison avec un catalyseur de type amine, de type sels métalliques, ou de type organométallique, comme décrit dans le document WO2008003914. Un tel catalyseur permet d'augmenter le temps d'activation des surfaces à encoller, et apporte plus de flexibilité à l'assembleur dans sa gestion du temps pour le collage, la manipulation et le conditionnement des pièces à assembler. Toutefois, ce mélange donne des résultats d'adhérence variables en fonction de la rigidité des grades de TPE ou de PA.

Il existe également des techniques de traitements de surface tels que : le flammage, traitement aux Ultra Violets, traitement de décharge corona, plasma, traitements faisceau d'électrons...

D'autres techniques connues incluent des traitements chimiques, tels que par exemple l'attaque des substrats à encoller à l'aide de solutions acides ou basiques, ou bien à l'aide de solvants spéciaux et spécifiques aux matériaux. A titre d'exemple, le Méta crésol est particulièrement bien adapté comme solvant des polymères à base de polyamide.

Toutefois, ces solutions acides ou basiques ou ces solvants sont difficilement manipulables à causes de leur toxicité, de leur écotoxicité et/ou de leur caractère corrosif. Leur emploi est donc souvent limité et demande des équipements appropriés de protection, d'application, et de traitement des rejets.

Plusieurs étapes complémentaires sont souvent nécessaires, comme la neutralisation des traitements chimiques, le rinçage et le séchage. Ces étapes sont à l'origine de rejets, générateurs de pollutions. Ces étapes additionnelles du procédé d'assemblage sont consommatrices d'énergie et réduisent la productivité, notamment lorsque l'assemblage est effectué en procédé continu sur lignes industrielles.

Le document EP0409120 décrit un matériau composite caoutchouc renforcé par un textile dont la surface est revêtue d'un agent adhérant pouvant contenir un isocyanate bloqué en combinaison avec un polyépoxyde. Cette combinaison de résine avec un agent de réticulation forme une colle latente. Les colles latentes telles que décrites dans ce document sont utilisées sur des matrices qui doivent être très résistantes aux hautes pressions et hautes températures pour subir dans un deuxième temps, généralement éloigné après stockage, transport, et/ou un dimensionnement du substrat préencollé avec la colle latente, un collage sous pression et température élevés, et un emboutissage. Or ce type de procédé de collage n'est pas adapté dans le cas des substrats TPE/PA car il risque d'endommager, de détériorer, de déformer, et de modifier les propriétés mécaniques du substrat TPE-PA.

Au contraire, dans le cas des TPE-PA, on se place dans le domaine du collage de stratifiés de formes complexes qui nécessitent des collages rapides successifs, par exemple pour la fabrication de chaussures de sport.

La présente invention a donc pour but d'améliorer l'adhérence des matériaux à base de (TPE-PA) aux joints de colle aqueux tout en réduisant les émissions de composés organiques volatiles (COV) générés habituellement lors de l'utilisation de primaires et/ou de colles en solution dans des solvants organiques.

La présente invention a donc aussi pour but de fournir un stratifié comprenant au moins un substrat à base de (TPE-PA), ainsi qu'un procédé de fabrication d'un tel stratifié, qui remédient aux inconvénients de l'art antérieur, en évitant notamment un dégagement important de solvant.

La présente invention a également pour but de fournir un tel stratifié dont la résistance au pelage est améliorée même lorsque l'on utilise des substrats en (TPE-PA) collés par des joints de colle aqueux.

La présente invention a encore pour but d'augmenter le niveau d'adhérence des matériaux (TPE-PA), sans altérer leurs propriétés mécaniques. La présente invention a également pour but d'améliorer la résistance au vieillissement de cette adhérence.

### Résumé de l'invention:

La présente invention a donc pour objet l'utilisation d'un promoteur d'adhérence (P) incorporé en quantité efficace dans une solution de nettoyage usuelle (N), peu toxique et peu écotoxique, par exemple la Methyl ethyl cétone. Ladite solution de nettoyage est destinée au nettoyage de la surface d'un substrat en matériau (TPE-PA), c'est-à-dire en matériau comprenant au moins un élastomère thermoplastique (TPE) et/ou au moins un polyamide (PA) et /ou leur mélange, et elle augmente l'adhérence dudit matériau avec des joints de colle aqueux. Ceci permet ainsi d'éviter l'utilisation de primaires et/ou de colles à base de solvants. Ledit promoteur d'adhérence (P) selon l'invention comprend au moins une molécule organique comprenant des groupements isocyanates bloqués par au moins un agent bloquant.

### Description détaillée de l'invention:

Par la présente invention, on utilise un promoteur d'adhérence dans une solution de nettoyage d'une surface d'un substrat S1 à base de (TPE-PA), ce qui permet d'augmenter l'adhérence de ladite surface à tout substrat S2, notamment par un joint de colle aqueux.

### 1- Substrat S1

Les matériaux (TPE-PA) du substrat S1 selon l'invention, comprennent au moins un élastomère thermoplastique (TPE) et/ou au moins un polyamide (PA) et/ou un mélange d'au moins un TPE et d'au moins un PA.

Par «polymère thermoplastique élastomère (TPE)», on entend un copolymère à blocs comportant, en alternance, des blocs ou segments dits durs ou rigides et des blocs ou segments dits souples ou flexibles.

A titre d'exemple de copolymère à blocs durs et à blocs souples, on peut citer respectivement (a) les copolymères à blocs polyesters et blocs polyéthers (appelés aussi COPE ou copolyétheresters), (b) les copolymères à blocs polyuréthanes et blocs polyéthers ou polyesters (appelés aussi TPU abréviation de polyuréthanes thermoplastiques) et (c) les copolymères à blocs polyamide et blocs polyéther (appelés aussi PEBA selon l'IUPAC).

**(a) S'agissant des COPE ou copolyétheresters**, ce sont des copolymères à blocs polyesters et blocs polyéthers. Ils sont constitués de blocs polyéthers souples issus de polyétherdiols et de blocs polyesters rigides qui résultent de la réaction d'au moins un diacide carboxylique avec au moins un motif diol court allongeur de chaîne. Les blocs polyesters et les blocs polyéthers sont reliés par des liaisons esters résultant de la réaction des fonctions acides de l'acide dicarboxylique avec les fonctions OH du polyétherdiol. L'enchaînement des polyéthers et des diacides forme les blocs souples alors que l'enchaînement du glycol ou du butane diol avec les diacides forme les blocs rigides du copolyétherester. Le diol court allongeur de chaîne peut être choisi dans le groupe constitué du neopentylglycol, du cyclohexanediméthanol et des glycols aliphatiques de formule HO(CH2)nOH dans laquelle n est un entier valant de 2 à 10.

Avantageusement, les diacides sont des acides dicarboxyliques aromatiques ayant de 8 à 14 atomes de carbone. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 14 atomes de carbone.

A titre d'exemple d'acides aromatiques dicarboxyliques, on peut citer l'acide téréphtalique, isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (p-oxybenzoïque), l'acide 1,3-triméthylène bis (p-oxybenzoique).

A titre d'exemple de glycols, on peut citer l'éthylène glycol, le 1,3-triméthylène glycol, le 1,4-tétraméthylèneglycol, le 1,6-hexaméthylène glycol, le 1,3 propylène glycol, le 1,8 octaméthylèneglycol, le 1,10-décaméthylène glycol et le 1,4-cyclohexylène diméthanol. Les copolymères à blocs polyesters et blocs polyéther sont, par exemple, des copolymères ayant des motifs polyéthers dérivés de polyétherdiols tels que le polyéthylène glycol (PEG), le polypropylène glycol (PPG), le polytriméthylène glycol (PO3G) ou le polytétraméthylène glycol (PTMG), des motifs diacide carboxylique tels que l'acide téréphtalique et des motifs glycol (éthane diol) ou butane diol, 1-4. De tels copolyétheresters sont décrits dans les brevets EP 402 883 et EP 405 227. Ces polyétheresters sont des élastomères thermoplastiques. Ils peuvent contenir des plastifiants.

**(b) S'agissant des TPU**, on peut citer les polyétheruréthanes qui résultent de la condensation de blocs polyéthers souples qui sont des polyétherdiols et de blocs rigides polyuréthanes issus de la réaction d'au moins un diisocyanate pouvant être choisi parmi les diisocyanate aromatiques (ex : MDI, TDI) et les diisocyanates aliphatiques (ex : HDI ou hexaméthylènediisocyanate) avec au moins un diol court. Le diol court allongeur de chaîne peut être choisi parmi les glycols cités plus haut dans la description des copolyétheresters. Les blocs polyuréthanes et les blocs polyéthers sont reliés par des liaisons résultant de la réaction des fonctions isocyanates avec les fonctions OH du polyétherdiol.

On peut encore citer les polyesteruréthanes qui résultent de la condensation de blocs polyesters souples qui sont des polyesterdiols et de blocs rigides polyuréthanes issus de la réaction d'au moins un diisocyanate avec au moins un diol court. Les polyesterdiols résultent de la condensation de diacides carboxyliques avantageusement choisis parmi les diacides aliphatiques dicarboxyliques ayant de 2 à 14 atomes de carbone et de glycols qui sont des diols courts allongeurs de chaîne choisis parmi les glycols cités plus haut dans la description des copolyétheresters. Ils peuvent contenir des plastifiants.

**(c) S'agissant des PEBA**, ils résultent de la polycondensation de blocs polyamides à extrémités réactives avec des blocs polyéthers à extrémités réactives, telles que, entre autres :
1) blocs polyamides à bouts de chaîne diamines avec des blocs polyoxyalkylènes à bouts de chaînes dicarboxyliques.
2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols
3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne.

Les blocs polyamides à bouts de chaînes diamines proviennent par exemple de la condensation de précurseurs de polyamides en présence d'une diamine limiteur de chaîne. La masse molaire en nombre Mn des blocs polyamides est comprise entre 400 et 20000 g/mole et de préférence entre 500 et 10000 g/mole.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatiques ou aromatiques, en particulier celles ayant de 2 à 20 atomes de carbone, de préférence celles ayant de de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

Avantageusement, on a des blocs PA4.12, PA4.14, PA4.18, PA6.10, PA6.12, PA6.14, PA6.18, PA9.12, PA10.10, PA10.12, PA10.14 et PA10.18.

Selon un deuxième type, les blocs polyamides résultent de la condensation d'un ou plusieurs acides alpha oméga aminocarboxyliques et/ ou d'un ou plusieurs lactames ayant de 6 à 12 atomes de carbone en présence d'un diacide carboxylique ayant de 4 à 12 atomes de carbone ou d'une diamine.

A titre d'exemples de lactames, on peut citer le caprolactame, l'oenantholactame et le lauryllactame.

A titre d'exemples d'acide alpha omega amino carboxylique, on peut citer les acides aminocaproïque, amino-7-heptanoïque, amino-11-undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare, les blocs polyamide PA par polycondensation :
- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques ;

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne.

A titre d'exemple d'acide alpha omega amino carboxylique aliphatique, on peut citer les acides aminocaproïques, amino-7-heptanoïque, amino-11-undécanoïque et amino-12-dodécanoïque.

A titre d'exemple de lactame, on peut citer le caprolactame, l'oenantholactame et le lauryllactame.

A titre d'exemple de diamines aliphatiques, on peut citer l'hexaméthylènediamine, la dodécaméthylènediamine et la triméthylhexaméthylène diamine.

A titre d'exemple de diacides cycloaliphatiques, on peut citer l'acide 1,4-cyclohexyldicarboxylique.

A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque "PRIPOL" par la société "UNICHEMA", ou sous la marque EMPOL par la société HENKEL) et les Polyoxyalkylènes - a,w diacides.

A titre d'exemple de diacides aromatiques, on peut citer les acides téréphtalique (T) et isophtalique (I).

A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivantes :
· 6.6 /6 dans laquelle 6.6 désigne des motifs hexaméthylènediamine condensée avec l'acide adipique. 6 désigne des motifs résultant de la condensation du caprolactame.
· 6.6/Pip.10/12 dans laquelle 6.6 désigne des motifs hexaméthylènediamine condensée avec l'acide adipique. Pip.10 désigne des motifs résultant de la condensation de la pipérazine et de l'acide sébacique. 12 désigne des motifs résultant de la condensation du lauryllactame.

Les proportions en poids sont respectivement 25 à 35 / 20 à 30 / 20 à 30 / le total étant 80 et avantageusement 30 à 35 / 22 à 27 / 22 à 27 / le total étant 80. Par exemple, les proportions 32 / 24 / 24 / conduisent à une température de fusion de 122 à 137°C.
· 6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

Les proportions en poids sont respectivement 10 à 20 / 15 à 25 / 10 à 20 / 15 à 25 le total étant 70 et avantageusement 12 à 16 / 18 à 25 / 12 à 16 / 18 à 25 le total étant 70.

Par exemple les proportions 14 / 21 / 14 / 21 / conduisent à une température de fusion de 119 à 131°C.

Les blocs polyéthers peuvent représenter 5 à 85 % en poids du copolymère à blocs polyamides et polyéthers. La masse Mn des blocs polyéther est comprise entre 100 et 6 000 g/mole et de préférence entre 200 et 3 000 g/mole.

Les blocs polyéthers sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG (polyethylène glycol) c'est à dire ceux constitués de motifs oxyde d'éthylène, des blocs PPG (propylène glycol) c'est à dire ceux constitués de motifs oxyde de propylène, des blocs PO3G (polytriméthylène glycol) c'est à dire ceux constitués de motifs polytriméthylène ether de glycol (De tels copolymères avec des blocs polytriméthylene ether sont décrits dans le brevet US 6590065), et des blocs PTMG c'est à dire ceux constitués de motifs tetraméthylène glycols appelés aussi polytétrahydrofurane. On utilise avantageusement des blocs PEG ou des blocs obtenus par oxyéthylation de bisphenols, tels que par exemple le bisphenol A. Ces derniers produits sont décrits dans le brevet EP 613 919.

Les blocs polyéthers peuvent aussi être constitués d'amines primaires éthoxylées. On utilise avantageusement aussi ces blocs. A titre d'exemple d'amines primaires éthoxylées on peut citer les produits de formule : 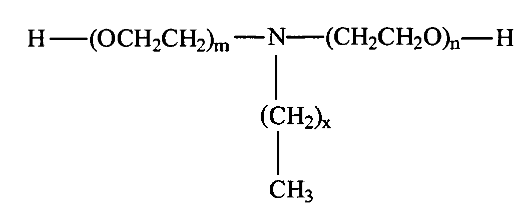 dans laquelle m et n sont compris entre 1 et 20 et x entre 8 et 18. Ces produits sont disponibles dans le commerce sous la marque NORAMOX® de la société CECA et sous la marque GENAMIN® de la société CLARIANT.

Les motifs éthers (A2) sont, par exemple, issus d'au moins un polyalkylène éther polyol, notamment un polyalkylène éther diol, de préférence choisi parmi le polyéthylène glycol (PEG), le polypropylène glycol (PPG), le polytriméthylène glycol (PO3G), le polytétraméthylène glycol (PTMG) et leurs mélanges ou leurs copolymères.

Les blocs souples polyéthers peuvent comprendre des blocs polyoxyalkylène à bouts de chaînes NH2, de telles blocs pouvant être obtenues par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman. Voir également brevets JP 2004346274, JP 2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne diacide pour faire les polymères à blocs polyamides et blocs polyéthers ayant des motifs répartis de façon statistique.

Ces polymères peuvent être préparés par la réaction simultanée des blocs polyéthers et des précurseurs des blocs polyamides de préférence, on conduit la polycondensation à une température de 180 à 300°C. Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

Mais ils peuvent être aussi préparés avantageusement par la réaction de condensation des blocs polyéthers avec les blocs polyamides.

Le catalyseur est défini comme étant tout produit permettant de faciliter la liaison des blocs polyamide et des blocs polyéther par estérification ou par amidification. Le catalyseur d'estérification est avantageusement un dérivé d'un métal choisi dans le groupe formé par le titane, le zirconium et l'hafnium ou encore un acide fort tel que l'acide phosphorique ou l'acide borique. Des exemples de catalyseurs sont ceux décrits dans les brevets US 4 331 786, US 4 115 475, US 4 195 015, US 4 839 441, US 4 864 014, US 4 230 838 et US 4 332 920.

La méthode générale de préparation en deux étapes des copolymères PEBA ayant des liaisons ester entre les blocs PA et les blocs PE est connue et est décrite, par exemple, dans le brevet français FR 2 846 332. La méthode générale de préparation des copolymères PEBA de l'invention ayant des liaisons amide entre les blocs PA et les blocs PE est connue et décrite, par exemple dans le brevet européen EP 1482 011.

La réaction de formation du bloc PA se fait habituellement entre 180 et 300°C, de préférence de 200 à 290°C, la pression dans le réacteur s'établit entre 5 et 30 bars, et on la maintient environ 2 à 3 heures. On réduit lentement la pression en mettant le réacteur à la pression atmosphérique, puis on distille l'eau excédentaire par exemple pendant une heure ou deux.

Le polyamide à extrémités acide carboxylique ayant été préparé, on ajoute ensuite le polyéther et un catalyseur. On peut ajouter le polyéther en une ou plusieurs fois, de même pour le catalyseur. Selon une forme avantageuse, on ajoute d'abord le polyéther, la réaction des extrémités OH du polyéther et des extrémités COOH du polyamide commence avec formation de liaisons ester et élimination d'eau. On élimine le plus possible l'eau du milieu réactionnel par distillation, puis on introduit le catalyseur pour achever la liaison des blocs polyamides et des blocs polyéthers. Cette deuxième étape s'effectue sous agitation, de préférence sous un vide d'au moins 6 mm Hg (800 Pa) à une température telle que les réactifs et les copolymères obtenus soient à l'état fondu. A titre d'exemple, cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible.

On pourra également ajouter pendant la synthèse, au moment jugé le plus opportun, une ou plusieurs molécules utilisées comme anti-oxydant, par exemple l'Irganox® 1010 ou l'Irganox® 245.

S'agissant de la préparation des copolymères à blocs polyamides et blocs polyéther, ils peuvent être préparés par tout moyen permettant d'accrocher les blocs polyamide et les blocs polyéther. En pratique, on utilise essentiellement deux procédés l'un dit en 2 étapes, l'autre en une étape.

Dans le procédé en deux étapes, on fabrique d'abord les blocs polyamides puis dans une deuxième étape on accroche les blocs polyamides et les blocs polyéthers. Dans le procédé en une étape on mélange les précurseurs de polyamide, le limiteur de chaînes et le polyéther; on obtient alors un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère. Que ce soit en une ou deux étapes il est avantageux d'opérer en présence d'un catalyseur. On peut utiliser les catalyseurs décrits dans les brevets US 4 331 786, US 4 115 475, US 4 195 015, US 4 839 441, US 4 864 014, US 4 230 838 et US 4 332 920, WO 04 037898, EP 1262527, EP 1270211, EP 1136512, EP 1046675, EP 1057870, EP 1155065, EP 506495 et EP 504058. Dans le procédé en une étape on fabrique aussi des blocs polyamide, c'est pourquoi on a écrit au début de ce paragraphe que ces copolymères pouvaient être préparés par tout moyen d'accrocher les blocs polyamides (bloc PA) et les blocs polyéthers (bloc PE).

Avantageusement, les copolymères PEBA ont des blocs PA en PA 6, en PA 11, en PA 12, PA 6.12, en PA 6.6/6, en PA 10.10 et en PA 6.14 et des blocs PE en PTMG, en PPG, en PO3G et en PEG.

**(d) S'agissant des polyamides** : Ce sont des homopolyamides ou des copolyamides, notamment statistiques ou réguliers.

Selon un premier type, les polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

Avantageusement, on a des PA 4.12, PA 4.14, PA 4.18, PA 6.10, PA 6.12, PA 6.14, PA 6.18, PA 9.12, PA 10.10, PA 10.12, PA 10.14 et PA 10.18.

Selon un deuxième type, les polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine.

A titre d'exemples de lactames, on peut citer le caprolactame, l'oenantholactame et le lauryllactame.

A titre d'exemples d'acide alpha omega amino carboxylique, on peut citer les acides aminocaproïque, amino-7-heptanoïque, amino-11-undécanoïque et amino-12-dodécanoïque.

Avantageusement les polyamides du deuxième type sont en polyamide 11, en polyamide 12 ou en polyamide 6.

Selon un troisième type, les polyamides résultent de la condensation d'au moins un acide alpha oméga aminocarboxylique (ou un lactame), au moins une diamine et au moins un diacide carboxylique.

Dans ce cas, on prépare les polyamides PA par polycondensation :
- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide.

A titre d'exemple d'acide alpha omega amino carboxylique aliphatique, on peut citer les acides aminocaproïques, amino-7-heptanoïque, amino-11-undécanoïque et amino-12-dodécanoïque.

A titre d'exemple de lactame, on peut citer le caprolactame, l'oenantholactame et le lauryllactame.

A titre d'exemple de diamines aliphatiques, on peut citer l'hexaméthylènediamine, la dodécaméthylènediamine et la triméthylhexaméthylène diamine.

A titre d'exemple de diacides cycloaliphatiques, on peut citer l'acide 1,4-cyclohexyldicarboxylique.

A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque "PRIPOL" par la société "UNICHEMA", ou sous la marque EMPOL par la société HENKEL) et les Polyoxyalkylènes - α,ω diacides.

A titre d'exemple de diacides aromatiques, on peut citer les acides téréphtalique (T) et isophtalique (I).

A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de polyamides du troisième type, on peut citer les suivants :
- PA6.6/6 dans laquelle 6.6 désigne des motifs hexaméthylènediamine condensée avec l'acide adipique. 6 désigne des motifs résultant de la condensation du caprolactame.
- PA6.6/Pip.10/12 dans laquelle 6.6 désigne des motifs hexaméthylènediamine condensée avec l'acide adipique. Pip. 10 désigne des motifs résultant de la condensation de la pipérazine et de l'acide sébacique. 12 désigne des motifs résultant de la condensation du lauryllactame. Les proportions en poids sont respectivement 25 à 35 / 20 à 30 / 20 à 30 / le total étant 80 et avantageusement 30 à 35 / 22 à 27 / 22 à 27 / le total étant 80. Par exemple, les proportions 32 / 24 / 24 / conduisent à une température de fusion de 122 à 137°C.
- PA6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame. Les proportions en poids sont respectivement 10 à 20 / 15 à 25 / 10 à 20 / 15 à 25 le total étant 70 et avantageusement 12 à 16 / 18 à 25 / 12 à 16 / 18 à 25 le total étant 70. Par exemple les proportions 14 / 21 / 14 / 21 / conduisent à une

Le substrat S1 est choisi parmi les (TPE-PA) définis précédemment et/ou leurs mélanges.

Bien entendu, le substrat S1 peut comprendre en outre des additifs tels des catalyseurs, notamment ceux à base de phosphore, des stabilisants aux UV, des colorants, des agents de nucléation, des plastifiants, des agents améliorant la résistance aux chocs, des anti-oxydants, des agents démoulants, des adjuvants ou auxiliaires de traitement ou de mise en oeuvre, des agents démoulants et des adjuvants ou auxiliaires de traitement ou mise en oeuvre, notamment des stéarates, tels que du stéarate de calcium, du stéarate de zinc et du stéarate de magnésium, des acides gras, des alcools gras, des esters de type ester montanique, des esters d'acide sébacique, des esters d'acide dodécanedioïque, des cires de polyoléfines, des cires amides, des stéaramides tels que l'éthylène bis stéaramide (EBS), des érucamides, des additifs fluorés, notamment de type Dyneon Dynamer FX 5914 ou FX 5911.

### 2- Substrat S2

Le substrat S2 peut être identique ou différent du substrat S1.

Le substrat S2 est choisi parmi les TPE/PA définis précédemment et/ou leur(s) mélange(s), les homopolymères et les copolymères tels que les polyoléfines, polyamines, les polyesters, les polyéthers, les polyesteréthers, les polyimides, les polycarbonates, les résines phénoliques, les polyuréthanes réticulés ou non, notamment les mousses, les poly (éthylène acétate de vinyle), les élastomères naturels ou synthétiques tels que les polybutadiènes, les polyisoprènes, les styrène-butadiène-styrène (SBS), les styrène-butadiène-acrylonitrile (SBN), les polyacrylonitriles, les tissus naturels ou synthétiques, notamment les tissus en fibres polymères organiques tels que les tissus en fibres de polypropylène, polyéthylène, polyesters, alcool polyvinylique, polyacétate de vinyle, polychlorure de vinyle, polyamide, les tissus en fibres de verre ou en fibres de carbone, ainsi que les matériaux comme le cuir, le papier et le carton.

### 3- Joint de colle (J)

D'une manière générale, les substrats (S1) à base de (TPE-PA) sont assemblés par collage avec d'autres substrats (S2) au moyen d'un joint de colle. Le joint de colle peut être appliqué en une ou plusieurs couches de colle(s) de compositions différentes ou non sur au moins une des surfaces des substrats à coller. Le joint de colle peut comprendre en outre une première couche de primaire qui améliore le mouillage des surfaces avec la colle. La colle et le primaire peuvent avoir des compositions plus ou moins proches, le primaire ayant le plus souvent une viscosité inférieure à celle de la colle. Un des avantages de l'invention est qu'à la fois le(s) primaire(s) d'adhérence et/ou la(les) colle(s) utilisés sont majoritairement aqueux.

### - S'agissant des colles appliquées sur le(s) substrat(s) à base de (TPE-PA) :

Les compositions de colle utilisées sont celles déjà bien connues dans le domaine du collage des différentes pièces pour former des stratifiés, dans les chaussures de sport notamment.

Les colles employées peuvent être monocomposant, contenant par exemple un polymère (fonctionalisé ou non) en dispersion dans l'eau. Les colles peuvent également être pluricomposant. Ce sont le plus souvent des colles bicomposant comprenant un premier composant qui peut être une résine fonctionnalisée (par exemple hydroxylée, carboxylée, époxy, amine, amide...) ou non, en dispersion ou en solution dans un solvant organique et/ou dans l'eau et un deuxième composant (réticulant), tel qu'une solution d'isocyanate dans un solvant organique ou encore un isocyanate pur ou en dispersion dans l'eau. Ledit deuxième composant peut comprendre un isocyanate bloqué. Pour limiter l'émission de solvants, le procédé de collage selon l'invention utilise préférentiellement les solutions aqueuses.

Bien entendu, d'autres types de colle à base aqueuse peuvent être utilisés. Par exemple des colles « contact » peuvent être utilisées, agissant par fusion de deux couches en contact.

### - S'agissant des primaires appliqués sur le(s) substrat(s) à base de (TPE-PA) :

Les compositions de primaire utilisées dans la présente invention sont généralement des compositions bicomposant dont le premier composant est une résine (fonctionnalisée ou non) en solution dans un solvant organique ou dans un solvant aqueux ou en dispersion dans un solvant aqueux et le deuxième composant (réticulant), qui est ajouté au premier composant juste avant utilisation, est un isocyanate ou mélange d'isocyanates également en solution dans un solvant organique ou dans un solvant aqueux ou en dispersion dans un solvant aqueux.

Selon la composition en solvant de ces primaires, cette étape d'application du primaire implique donc plus ou moins d'émissions de solvants organiques dans l'atmosphère. Le procédé de collage selon l'invention préfère donc là aussi les solutions aqueuses. Bien entendu, tout autre agent de réticulation peut être utilisé, par exemple l'héxaméthoxymethylmélamine (HMMM) qui est approprié dans le cas des primaires à l'eau.

### 4- Solutions de nettoyage (N)

Les solutions de nettoyage (N), dans lesquelles on incorpore un promoteur d'adhérence (P) selon l'invention, sont celles généralement utilisées pour éliminer les impuretés, graisses, agents étrangers qui pourraient altérer l'adhésion des primaires et/ou des colles sur les substrats.

Ces solutions de nettoyage peuvent également contenir des additifs tels que des agents mouillants ou des détergents pour favoriser l'élimination de produits polluants et/ou pour améliorer la mouillabilité des supports.

On peut citer par exemple les solutions de nettoyage à base d'eau, à base de solvants organiques aliphatiques ou à base de solvants aromatiques et leurs mélanges composés de 2 ou plusieurs des 3 solvants précédents.

Les principaux groupes de solvants sont :
· L'eau
· Les cétones(ex : Acétone, méthyléthylcétone).
· Les alcools(ex : méthanol, éthanol, isopropanol, glycols).
· Les Esters(ex : acétates, agrosolvants).
· Les Ethers(ex : Ethers éthyliques, THF, dioxane)
· Les Ethers de glycol.
· Les Hydrocarbures aromatiques (benzène, toluène, xylène, cumène).
· Les Solvants pétroliers (hors aromatiques :alcanes, alcènes).
· Les Hydrocarbures halogénés : (chlorés bromés ou fluorés).
· Solvants particuliers (amines, amides, terpènes).

Les solvants organiques ou les solutions à base d'eau et/ou à base de solvants organiques seront judicieusement choisis de manière à réduire au maximum les émissions de solvants, et à réduire les risques liés à la toxicité et à l'écotoxicité. De manière avantageuse on choisira la méthyléthylcétone (MEK) comme solvant de nettoyage du type organique ou bien une solution détergente à base aqueuse (dispersion ou émulsion), en fonction de la compatibilité du promoteur. S'agissant d'une dispersion dans l'eau ou d'une émulsion aqueuse de nettoyage, le promoteur d'adhérence (P) est introduit avec des additifs facilitant la stabilité de la dispersion ou de l'émulsion.

Concernant le procédé de nettoyage, celui-ci peut être fait selon des techniques couramment utilisées dans le domaine, telles que : l'application au pinceau au chiffon, la pulvérisation, le trempage, etc. La technique préférée pour le nettoyage d'un substrat (TPE-PA) est le trempage car il assure une homogénéité de l'effet promoteur d'adhérence de surface par l'activateur ainsi qu'un niveau de collage uniforme. Le nettoyage par trempage permet d'éviter plus facilement la contamination du substrat par d'éventuelles impuretés. De plus la technique du trempage est parfaitement adaptée aux procédés de collage en continu sur ligne d'assemblage. De manière alternative, le nettoyage au pinceau ou à l'aide d'un textile peut être utilisé, mais il génère des déchets souillés.

On effectue ensuite un « séchage » de la surface nettoyée à température comprise dans la gamme allant de 50°C à 140°C, afin de pouvoir appliquer directement sur la surface nettoyée, le joint de colle, ce joint de colle pouvant comprendre par exemple une première couche de primaire, et une couche de colle appliquée sur cette première couche de primaire.

### 5- Promoteur d'adhérence

Le promoteur d'adhérence (P) utilisé dans la solution de nettoyage selon l'invention comprend au moins une molécule organique comportant des fonctions isocyanates bloquées. Les fonctions isocyanates sont bloquées par des agents appelés « agents bloquants ».

On désignera par (NP) la solution de nettoyage promoteur d'adhérence de l'invention, comprenant un mélange de solution de nettoyage (N) et de promoteur d'adhérence (P) selon l'invention.

On entend par molécule organique une molécule comportant une chaîne linéaire, ramifiée, cyclique, saturée ou insaturée, contenant des carbones et des hydrogènes.

On entend par molécule à fonction(s) isocyanate(s) bloquée(s), une molécule, notamment un polymère, dont les fonctions isocyanates ne sont actives qu'au dessus d'une certaine température. En effet, la libération des fonctions isocyanates se produit au cours d'une réaction chimique activée thermiquement, de sorte qu'à température ambiante, aucune fonction isocyanate n'est accessible lors de la manipulation du promoteur d'adhérence (P) ou de la solution de nettoyage (NP). Cet état limite fortement les risques de contact des manipulateurs avec des groupements isocyanates, comparativement aux manipulations de formulations contenant des fonctions isocyanates libres, connues pour être allergisantes.

Le promoteur d'adhérence (P) selon l'invention comprend une ou plusieurs molécules, notamment polymères, contenant des fonctions isocyanates choisies parmi au moins l'une des formules chimiques suivantes: le 4, 4'-diphénylméthane diisocyanate (MDI), le 1,6-hexaméthylène diisocyanate (HDI), l'isophorone diisocyanate (IPDI) et le toluène diisocyanate (TDI) et leurs mélanges.

Ces fonctions peuvent être associées sous forme de dimère ou trimère ou bien greffées à des polyméres ou oligoméres. On les nomme par exemple TDI Prépolymère, HDI Trimère, IPDI Trimère.

Pour leur affinité avec les TPE et leur réactivité avec les fonctions disponibles des TPE on préférera les structures isocyanates aromatiques, par exemple du type TDI ou les prépolymères de TDI.

Parmi les agents bloquants, on peut citer le Diethyl Malonate (DME), le 3.5- Diméthylpyrazole (DMP), la Méthylethylketoxime (MEKO), le Caprolactame (e-CAP).

Parmi les molécules à fonctions isocyanates bloquées, on choisira de préférence celles bloquées avec le 3.5-Diméthylpyrazole (DMP) pour ses propriétés de déblocage à basse température, dès 60°C, sa stabilité en solution dans des solvants usuels de nettoyage type Méthyle Ethyle Cétone (MEK) ou isopropanol, et sa faible sensibilité à l'humidité.

Ces produits sont disponibles dans le commerce, par exemple auprès de la société Baxenden sous la dénomination Trixene grades BI , Trixene BI 7641 (TDI Prépolymère), BI 7642 (TDI Prépolymère), BI 7986 et BI 7987 (HDI Trimer).

De manière surprenante, un promoteur d'adhérence selon l'invention, par exemple le Trixene BI 7641 (TDI Prépolymère) bloqué DMP, reste parfaitement soluble et stable dans une quantité importante de MEK avec laquelle il forme une solution limpide, la MEK étant un solvant de nettoyage classique très largement utilisé dans l'industrie de la chaussure.

Bien entendu, ces exemples de molécules à fonctions isocyanates bloquées ne sont que des exemples de modes de réalisation de la présente invention. Ils ne sont donnés qu'à titre purement illustratif et non limitatif. D'autres molécules à fonctions isocyanates bloquées particulièrement bien adaptées pour entrer dans la composition du promoteur d'adhérence selon l'invention sont décrites dans le brevet européen EP 1 358 242. Parmi les promoteurs d'adhérence selon l'invention, certains comportent des molécules à isocyanates(s) bloqué(s) en solvant, d'autres comportent des molécules à isocyanates bloqués en dispersion aqueuse.

Selon leur affinité, les promoteurs d'adhérence selon l'invention sont donc introduits en solution dans un solvant organique de nettoyage ou bien en dispersion dans une composition aqueuse de nettoyage à raison de 0.5 à 20% en poids de matière active, de préférence de 0.5 à 5%, ou mieux de 0,5 à 2% en poids de matière active.

S'agissant d'une solution organique, le promoteur d'adhérence (P) est solubilisé à température ambiante sous agitation jusqu'à dissolution complète.

S'agissant d'une dispersion aqueuse de nettoyage ou d'une émulsion à phase continue aqueuse, le promoteur d'adhérence (P) est introduit avec des additifs facilitant la stabilité de la dispersion ou de l'émulsion.

Les promoteurs d'adhérence (P) selon l'invention ne sont activés que lors de l'opération de « séchage » de la solution de nettoyage (NP), à une température comprise dans la gamme allant de 50°C à 140°C, et de préférence allant de 70 à 120°C.

Après activation en température, les fonctions isocyanates libres réagissent avec les fonctions chimiques disponibles en surface des substrats (TPE-PA) puis avec les fonctions du joint de colle appliqué par la suite jouant ainsi leur rôle de promoteur d'adhérence.

Le déblocage des fonctions isocyanates à basse température (50°C-140°C) s'intègre parfaitement aux procédés industriels de collage, et permet d'éviter les déformations des éléments à coller, surtout si ceux-ci sont sensibles aux changements dimensionnels en fonction de la température.

De plus, le fait d'utiliser un promoteur d'adhérence dans une solution de nettoyage, plutôt que dans un primaire ou une colle, présente plusieurs avantages :

D'une part, grâce à la présente invention, il n'est pas nécessaire de modifier la composition des primaires ou colles classiquement utilisées. En effet, le type de promoteur d'adhérence utilisé selon l'invention dans une colle ou un primaire aurait pour effet de déséquilibrer dans ces compositions le pourcentage de groupements réactifs, donc de décaler et de diminuer les propriétés de collage du primaire et de la colle. Par conséquent, cela demanderait de reformuler ces primaires et colles.

D'autre part, selon la présente invention, seule est utilisée la quantité minimale de promoteur d'adhérence (en moyenne 1,8% d'extrait sec) nécessaire pour entraîner l'effet promoteur d'adhérence. Au contraire, utilisé dans la colle ou le primaire, le promoteur d'adhérence devrait être ajouté à hauteur de 5% au moins pour observer un effet sur le collage d'un stratifié.

Grâce à la présente invention, le promoteur d'adhérence se trouve sur la surface du substrat (TPE/PA) à coller, précisément sur le site où son action est nécessaire et efficace directement. Au lieu d'être réparti dans toute l'épaisseur d'une couche de primaire ou de colle, la situation du promoteur d'adhérence en surface et donc son action sont optimisées.

De manière surprenante, on observe un effet promoteur d'adhérence à des températures inférieures à celles couramment nécessaires et préconisées pour le déblocage des fonctions isocyanates, actuellement utilisées dans des domaines de températures élevées largement supérieures à 110°C-120°C. Le promoteur d'adhérence utilisé selon l'invention fait apparaître un déblocage de fonctions isocyanates suffisant dès 50°C à 70°C, pour entraîner un effet promoteur d'adhérence. Les matériaux généralement susceptibles d'être déformés à haute température peuvent donc être collés grâce au procédé de l'invention sans risque de déformation.

### 6- Procédé de fabrication d'un stratifié

La présente invention concerne également un procédé de fabrication d'un stratifié. Conformément à la présente invention, le collage des types décrits de substrats (S1) sur des substrats (S2), pour la fabrication de stratifiés comprend les étapes décrites ci-dessous.

Selon un premier mode de réalisation avantageux dans le cas où les substrats S1 et S2 sont en (TPE-PA) de même nature ou non, le procédé de fabrication d'un stratifié comprend les étapes de:
(a) Nettoyage des surfaces S1 et S2 avec une solution de nettoyage (NP);
(b) Séchage et activation de (NP) à une température comprise dans la gamme allant de 60 et 140°C;
(c) Application éventuelle d'une couche de primaire à base aqueuse sur S1 et/ou S2;
(d) Cuisson de la/des couche(s) de primaire le cas échéant;
(e) Application d'au moins une couche de colle à base aqueuse sur une surface d'au moins un des deux substrats et/ou sur la surface de la/des couche(s) de primaire le cas échéant préalablement déposée(s) sur S1 et/ou S2 ;
(f) Cuisson des couches de colles à une température, de l'ordre de 60°C à 150°C.
(g) Accostage à chaud de la surface comportant la couche de colle aqueuse d'un des substrats avec la surface, comportant ou non une couche de colle, de l'autre substrat
(h) Mise sous presse de l'ensemble ; puis retrait de la presse
(i) Récupération du produit stratifié.

La pression appliquée lors de l'étape de mise sous presse est de 1 à 15kg/cm², de préférence 3 à 10kg/cm².

La mise sous presse peut être faite sous atmosphère humide, l'air ayant une humidité relative HR³ supérieure à 5%, de préférence supérieure à 10 %, et mieux supérieure à 20%.

Selon un deuxième mode de réalisation avantageux de la présente invention, dans le cas où S1 est en (TPE-PA) et S2 est de nature chimique différente de (TPE-PA), le procédé de fabrication d'un stratifié comprend les étapes de:
(a) Nettoyage de la surface S1 avec une solution de nettoyage (NP).
   Nettoyage et/ou préparation du substrat S2 adaptés à la nature du substrat, selon des techniques habituelles connues de l'homme du métier.
(b) Séchage de S1 et activation de (NP) à une température comprise dans la gamme allant de 60 et 140°.
(c) Application éventuelle (c'est-à-dire non essentielle) d'une couche de primaire à base aqueuse sur S1, suivie le cas échéant d'une cuisson de ce primaire.
(d) Application ou non d'une couche de primaire approprié sur le substrat S2 suivie le cas échéant d'une cuisson de ce primaire.
(e) Application d'une couche de colle à base aqueuse sur la surface de S1 ou bien sur la surface du primaire le cas échéant préalablement déposé sur S1.
(f) Cuisson de la couche de colle à une température, de l'ordre de 60°C à 150°C.
(g) Application d'une couche de colle sur la surface de S2, ou bien sur la surface du primaire le cas échéant préalablement déposé sur S2. Cette colle est préférentiellement aqueuse et compatible avec la colle déposée sur le substrat S1. Avantageusement, cette colle est identique à celle déposée sur le substrat S1.
(h) Cuisson de la colle. Si c'est la même colle que pour l'étape (f), la cuisson s'effectue à la même température qu'en (f). S'il s'agit d'une autre colle, la température de cuisson est fonction du support et des préconisations du formulateur.
(i) Accostage à chaud de la surface comportant la couche de colle aqueuse déposée sur le substrat S1 avec la couche de colle déposée sur le substrat S2.
(j) Mise sous presse de l'ensemble ; et après retrait de la presse,
(k) Récupération du produit stratifié.

La pression appliquée lors de l'étape de mise sous presse est de 1 à 15kg/cm², de préférence 3 à 10kg/cm²;

La mise sous presse peut être faite sous atmosphère humide, l'air ayant une humidité relative HR³ supérieure à 5%, de préférence supérieue à 10% et mieux supérieure à 20%.

Les presses utilisées dans le procédé de l'invention sont les presses classiques dans le domaine de la fabrication des stratifiés.

Appliqués à la fabrication de stratifiés, les nettoyages à base de promoteur d'adhérence (NP) sur des matériaux du type (TPE-PA) selon la présente invention, permettent donc l'emploi d'un procédé qui est à la fois :
- Fiable, en permettant une adhérence améliorée des (TPE-PA) avec les joints de colle aqueux, et
- Sécuritaire, en utilisant un joint de colle totalement aqueux (colle et/ou primaire compris).

En effet, l'émission de solvants au cours du procédé de l'invention est considérablement réduite. Selon un mode de réalisation avantageux de l'invention, le nettoyage des surfaces des substrats à coller est réalisé avec une solution détergente à base aqueuse, la colle utilisée est aqueuse, de même que l'éventuel primaire d'adhérence utilisé.

### Exemples

Les exemples ci-dessous illustrent la présente invention sans en limiter la portée. Dans les exemples, sauf indication contraire, tous les pourcentages et parties sont exprimés en poids.

### Tests d'adhérence : Essais N° 1 à 13

### Substrats :

MX 1940 : PEBA de type PA12-PTMG (polyamide 12 - polytétraméthylène glycol), commercialisé par la Société ARKEMA sous la dénomination « PEBAX® MX 1940».

5533 : PEBA de type PA12-PTMG (polyamide 12 - polytétraméthylène glycol), commercialisé par la Société ARKEMA sous la dénomination « PEBAX® 5533 ».

7033 : PEBA de type PA12-PTMG (polyamide 12 - polytétraméthylène glycol), commercialisé par la Société ARKEMA sous la dénomination « PEBAX® 7033 ».

Le PEBAX® 7033 est plus dur que le PEBAX® 5533 ou le PEBAX® MX 1940.

### Géométrie des substrats:

Largeur : 15mm

Longueur : 100mm

Epaisseur : 1mm

Dans les exemples suivants, la couche de primaire a une épaisseur sèche (après sèchage) de 1 à 20 µm et la couche de colle une épaisseur sèche de 30 à 50µm.

### Promoteur d'adhérence:

Trixene BI 7641 (TDI Prépolymère- 60% d'extrait sec en poids)

### Solution de nettoyage (N):

MEK : MÉTHYL ÉTHYL CÉTONE

### Solution de « nettoyage promoteur d'adhérence » (NP):

*3 grammes de* Trixéne BI 7641 (TDI Prépolymère - 60% d'extrait sec en poids) sont solubilisés sous agitation dans 97g de MEK. La solution NP doit être parfaitement incolore après dissolution.

### Primaires :

W104 : primaire à base aqueuse commercialisé par la Société DONGSUNG sous la dénomination « Aquace® W104 ». (Extrait sec - 30 min à 150°C= 40 % en poids)

Agent de réticulation ARF-40® commercialisée par la société Dongsung. (Extrait sec - 30 min à 150°C= 83,5% en poids)

Dply 171-2 : primaire à base solvant commercialisé par la Société DONGSUNG sous la dénomination « D-Ply® 171-2 » (Extrait sec - 30 min à 150°C= 10% en poids).

Agent de réticulation RFE® commercialisée par la société Bayer. (Extrait sec - 30 min à 150°C= 26,9% en poids)

DPLY 007 : Primaire solvant utilisé pour le caoutchouc, commercialisé par la société DONGSUNG sous la dénomination « DPLY 007 ».

Un deuxième composant « composé chloré » est additionné à raison de 3 à 5% en poids dans le DPLY007

### Colle:

W01 : colle aqueuse commercialisée par la Société DONGSUNG sous la dénomination «Aquace® W01» (Extrait sec - 30 mn 150°C= 46.9% en poids).

Agent de réticulation ARF-40® commercialisée par la société Dongsung.

### Matériel:

Les essais ont été réalisés en utilisant le matériel suivant :
- presse hydraulique (8 à 15 kg/cm2);
- étuve à convection Heraeus consigne 70°C, ventilée ;
- emporte pièce ISO 34 ;
- presse pneumatique pour la découpe d'éprouvettes.

### Mode opératoire général d'assemblage:

### ➢ Préparation du substrat (S1)

- Solution de nettoyage : MEK + 3.0% (Extrait sec en poids : 1,8%) de promoteur d'adhérence (Prépolymère du type TDI bloqué DMP) ;
- Nettoyage au chiffon ou trempage d'une face lisse du substrat S1;
   Temps de nettoyage : 3 à 20s
- Séchage 5 minutes à des températures comprises entre 60 à 120°C.
- Application du primaire W104 aqueux (+5% agent de réticulation ARF-40®) au pinceau;
- Séchage 5 minutes à 70°C en étuve ventilée ;
- Refroidissement 2 minutes à la température ambiante ;
- Application de la colle aqueuse W01 (+5% agent de réticulation ARF-40®) au pinceau ;
- Séchage : 5 minutes à 70°C en étuve ventilée.

### ➢ Préparation du substrat (S2)

Dans le cas où le substrat S2 est de nature (TPE-PA) et le primaire utilisé est à base aqueuse, la préparation du substrat S2 est identique à celle du substrat S1 défini dans le paragraphe précédent désigné : Préparation du support S1.

Dans le cas où le substrat S2 est de nature (TPE-PA) et le primaire utilisé est à base solvent, la préparation du substrat S2 est décrite comme suit:
- Nettoyage au solvant MEK d'une face lisse du substrat S2;
   Temps de nettoyage 3 à 20s.
- Séchage 2 minutes à température ambiante ;
- Application du primaire Dply 171-2 (+5% agent de réticulation RFE®) au pinceau ;
- Séchage 5 minutes à 70°C en étuve ventilée ;
- Refroidissement 2 minutes à température ambiante ;
- Application de la colle W01 (+5% agent de réticulation ARF-40®) aqueuse au pinceau ;
- Séchage 5 minutes à 70°C en étuve ventilée.

Dans le cas où le substrat S2 est un caoutchouc :

Le caoutchouc est préalablement poncé, les particules de caoutchouc sont éliminées au jet d'air, le substrat est ensuite abondamment nettoyé à la MEK, puis séché 5 mn à 70°C dans une étuve ventilée.

Le primaire DPLY 007 additivé est appliqué au pinceau puis séché 5 minutes à 70°C dans une étuve ventilée. La suite des étapes de préparation reste inchangée.

### ➢ Essais de pelage

L'adhérence des substrats est directement liée aux valeurs de forces de pelage.

On a effectué sur les stratifiés de chacun des exemples N° 1 à 13 un essai de pelage selon la norme ISO11339 vitesse 100mm/minute. Les essais de pelage sont faits de préférence dans un délai compris entre 2 heures et 48 heures après le collage.

Les résultats de ces essais sont donnés dans le tableau 1.

Les résultats montrent, quelle que soit la dureté du Pebax® utilisé, des résistances au pelage élevées, bien supérieures à 3 Kg/cm grâce au procédé de fabrication de stratifiés selon l'invention, avec un nettoyage promoteur d'adhérence. Les résultats d'adhérence sont optimisés, avec des forces de pelage supérieures à 8, notamment pour les stratifiés dont les deux substrats sont à base (TPE-PA), et pour des températures de séchage de l'ordre de 60 à 120°C.

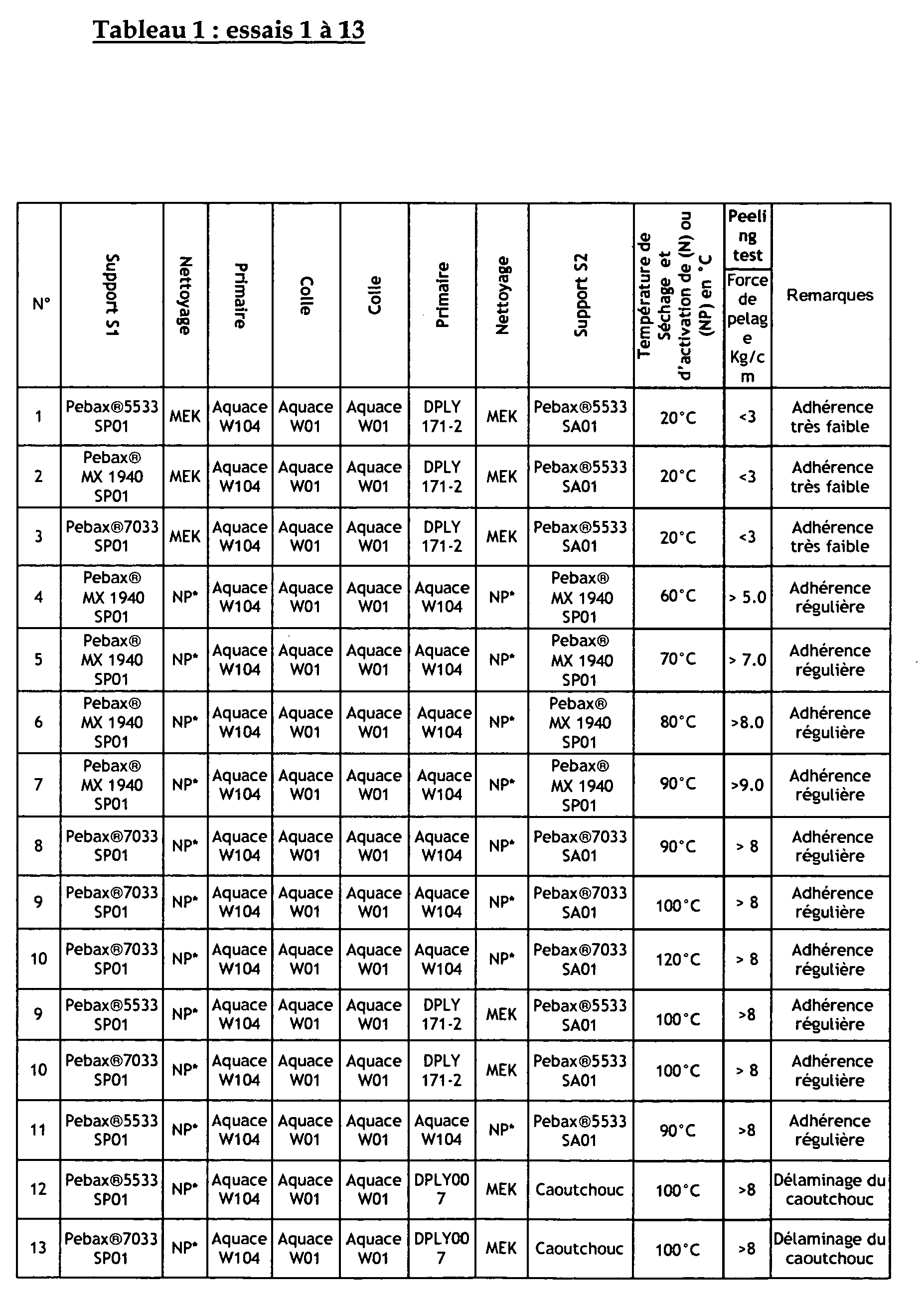

### Tests de résistance au vieillissement : Essais N° 14 à 17

Dans les exemples 14 et 16 selon l'invention, des substrats S1 respectivement en Pebax 5533 et 7033 sont collés à un substrat S2 en caoutchouc, suivant le même mode opératoire d'assemblage que celui défini précédemment.

Dans les exemples comparatifs 15 et 17 (qui ne sont pas selon l'invention), des substrats S1 respectivement en Pebax 5533 et 7033 sont collés à un substrat S2 en caoutchouc, suivant le même mode opératoire, excepté le fait que la solution de nettoyage (MEK) ne contient pas de promoteur d'adhérence suivant l'invention, et que l'étape de nettoyage est suivie d'une étape d'activation par un mélange 1,3-butanediol/n-butanol de rapport volumique 70/30 (abrégé bb* dans le tableau).

On effectue sur une partie des stratifiés de chacun des exemples N° 14 à 17 un essai de pelage selon la norme ISO11339 vitesse 100mm/minute. Ces essais de pelage sont faits dans un délai de 12 heures après le collage (avant vieillissement).

On effectue sur l'autre partie des stratifiés de chacun des essais N° 14 à 17, dans un délai de 12 heures après le collage, un test de vieillissement.

Test de vieillissement : Chacun des stratifiés est placé dans une étuve à 70°C et avec un taux d'humidité de 50% pendant 5 jours.

A l'issue de ces 5 jours, on effectue un essai de pelage suivant la norme ISO1133 sur ces stratifiés ayant subi un vieillissement.

Le tableau 2 résume les résultats de mesures des forces de pelage avant vieillissement et après vieillissement :

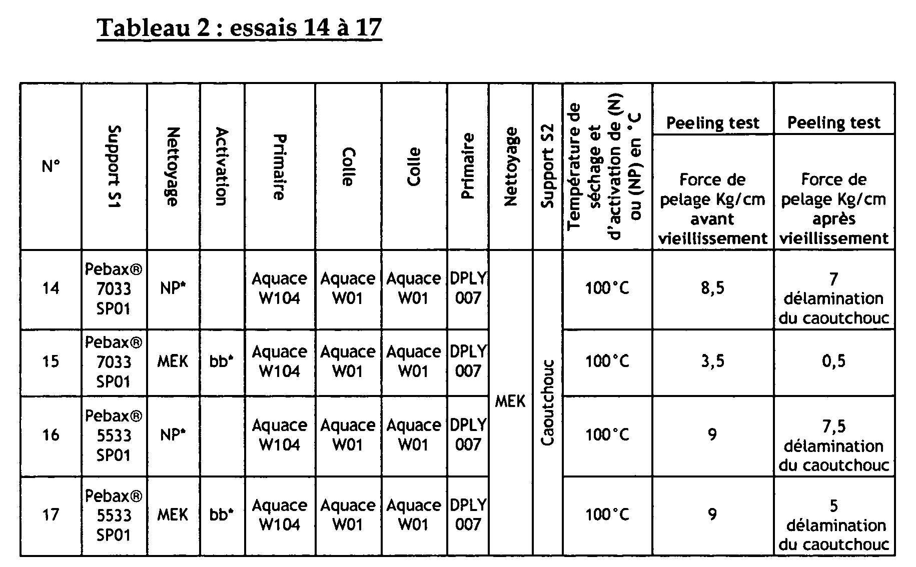

En comparant les essais 14 et 15, on remarque que l'utilisation selon l'invention (essai 14) d'un promoteur d'adhérence dans la MEK permet de coller même sur les grades durs de Pebax avec une force de pelage supérieure à 8 Kg/cm, alors que pour l'essai 15 (non selon l'invention), même une étape d'activation par un mélange 1,3-butanediol/n-butanol réalisée après un nettoyage à la MEK seule ne donne qu'une force de pelage inférieure à 3,5 Kg/cm sur le même grade dur de Pebax.

En comparant les essais 14 et 17, on remarque que la force de pelage des stratifiés obtenus selon le procédé de l'invention (essais 14 et 16) reste importante (au moins égale à 7) même après vieillissement des stratifiés, et supérieure à la force de pelage des essais 15 et 17 n'ayant pas subi de nettoyage avec une solution de promoteur d'adhérence dans la MEK.

En conclusion, l'utilisation d'un promoteur d'adhérence selon l'invention, permet d'augmenter l'adhérence de matériaux TPE-PA, même sur les grades les plus durs, et l'adhérence obtenue par des joints de colle aqueux est plus stable qu'avec les techniques de collage de l'art antérieur sur TPE-PA.

## Revendications

1. Utilisation d'un promoteur d'adhérence (P) en quantité efficace dans une solution de nettoyage (N) pour former une solution de nettoyage promoteur d'adhérence (NP), ladite solution (NP) étant destinée à nettoyer la surface d'un substrat en un matériau (TPE-PA) comprenant au moins un élastomère thermoplastique (TPE) et/ou au moins un polyamide (PA) et/ou leur(s) mélange(s) et à augmenter l'adhérence de ladite surface avec des joints de colle aqueux, ledit promoteur d'adhérence (P) comprenant au moins une molécule organique comportant au moins une fonction isocyanate bloquée par au moins un agent bloquant, dans laquelle ladite solution de nettoyage promoteur d'adhérence (NP) a une teneur en promoteur d'adhérence (P) représentant 0,5 à 20% en masse de matière active sur la masse totale de la solution de nettoyage (NP).

2. Utilisation selon la revendication 1, dans laquelle ladite solution de nettoyage promoteur d'adhérence (NP) a une teneur en promoteur d'adhérence (P) représentant 0,5 à 2% en masse de matière active sur la masse totale de la solution de nettoyage (NP).

3. Utilisation selon la revendication 1 ou 2, dans laquelle ledit promoteur d'adhérence (P) comprend au moins une des molécules organiques suivantes : le 4, 4'-diphénylméthane diisocyanate (MDI), le 1,6-hexaméthylène diisocyanate (HDI), l'isophorone diisocyanate (IPDI) et le toluène diisocyanate (TDI) et/ou leurs mélanges.

4. Utilisation selon l'une quelconque des revendications précédentes, dans laquelle ledit promoteur d'adhérence (P) comprend au moins un isocyanate aromatique, de préférence de type TDI.

5. Utilisation selon l'une quelconque des revendications précédentes, dans laquelle ledit au moins un agent bloquant est choisi parmi le Diethyl Malonate (DME), le 3.5- Diméthylpyrazole (DMP), la Méthylethylketoxime (MEKO), le Caprolactame (e-CAP), et/ou leurs mélanges.

6. Utilisation selon l'une quelconque des revendications précédentes, dans laquelle ledit au moins un agent bloquant est le 3.5-Diméthylpyrazole (DMP).

7. Utilisation selon l'une quelconque des revendications précédentes, dans laquelle le nettoyage à l'aide de ladite solution de nettoyage promoteur d'adhérence (NP) est réalisé par un ou plusieurs des procédés suivants:
- par application directe au pinceau ou au chiffon,
- par pulvérisation,
- par trempage

8. Utilisation selon l'une quelconque des revendications précédentes, dans laquelle ledit matériau comprend au moins un TPE choisi parmi les COPE et/ou les TPU et/ou les PEBA et/ou leur mélange.

9. Utilisation selon l'une quelconque des revendications précédentes, dans laquelle ledit matériau est le matériau d'au moins un premier substrat (S1) et d'un second substrat (S2) adhérant l'un à l'autre au moyen d'un joint de colle aqueux, pour former un stratifié.

10. Utilisation selon la revendication 9, dans laquelle le matériau du substrat S1 et le matériau du substrat S2 sont de même nature.

11. Utilisation selon la revendication 9, dans laquelle le matériau du substrat S1 et le matériau du substrat S2 sont de nature différente, S2 étant choisi parmi les TPE, les homopolymères et les copolymères tels que les polyoléfines, polyamines, les polyesters, les polyéthers, les polyesteréthers, les polyimides, les polycarbonates, les résines phénoliques, les polyuréthanes réticulés ou non, notamment sous forme de mousse, les poly (éthylène acétate de vinyle), les élastomères naturels ou synthétiques tels que les polybutadiènes, les polyisoprènes, les styrène-butadiène-styrène (SBS), les styrène-butadiène-acrylonitrile (SBN), les polyacrylonitriles ; les tissus naturels ou synthétiques, notamment les tissus en fibres de polymères organiques tels que les tissus en fibres de polypropylène, polyéthylène, polyesters, alcool polyvinylique, polyacétate de vinyle, polychlorure de vinyle, polyamide ; les tissus en fibres de verre ou en fibres de carbone, ainsi que les matériaux comme le cuir, le papier et le carton.

12. Utilisation selon l'une des revendications 9 à 11, dans laquelle ledit joint de colle aqueux comprend au moins une couche de primaire aqueux et/ou au moins une couche de colle aqueuse.

13. Utilisation selon la revendication 12, dans laquelle ladite colle et/ou ledit primaire sont de nature bi-composant :
- un premier composant comprenant une résine fonctionnalisée ou non en solution dans l'eau ou en dispersion dans l'eau, et
- un deuxième composant comprenant un réticulant tel qu'un isocyanate, pur ou en solution dans un solvant ou en dispersion dans l'eau.

14. Utilisation selon la revendication 13, dans laquelle ledit deuxième composant comprend un isocyanate bloqué.

15. Procédé d'assemblage par collage de deux substrats S1 et S2 au moyen d'un joint de colle aqueux, l'un au moins desdits deux substrats étant en matériau (TPE-PA) comprenant au moins un élastomère thermoplastique TPE et/ou au moins un polyamide PA, le dit procédé comprenant les étapes :
(a) de nettoyage de la surface du/des substrats (TPE-PA) avec une solution de nettoyage comprenant un promoteur conforme à celui défini dans l'une quelconque des revendications 1 à 6;
(b) d'application d'un joint de colle aqueux sur une surface d'au moins un des deux substrats ;
(c) d'accostage de la surface comportant le joint de colle aqueux (J) d'un des substrats avec une surface de l'autre des substrats pour former un ensemble comprenant les deux substrats avec entre eux le joint de colle aqueux ;
(d) de mise sous presse de l'ensemble, et après retrait de la presse ;
(e) de récupération de l'ensemble sous forme d'un produit stratifié.

16. Produit stratifié, notamment semelle de chaussure, comprenant un premier substrat (S1) et un second substrat (S2) adhérant l'un à l'autre au moyen d'un joint de colle aqueux (J), la surface de l'un au moins du premier et du second substrat comprenant au moins un promoteur d'adhérence conformes à celui défini dans l'une quelconque des revendications 1 à 6.

17. Solution de nettoyage promoteur d'adhérence (NP), destinée à nettoyer la surface de substrat(s) en matériau (TPE-PA) comprenant au moins un élastomère thermoplastique (TPE) et/ou au moins un polyamide (PA) et/ou leur(s) mélange(s), ladite solution comprenant un promoteur d'adhérence (P) conforme à celui défini dans l'une quelconque des revendications 1 à 6; pour augmenter l'adhérence de ladite surface avec des joints de colle aqueux, la teneur en promoteur d'adhérence (P) représentant 0,5 à 20% en masse de matière active sur la masse totale de la solution de nettoyage (NP).

18. Solution de nettoyage selon la revendication 17, **caractérisée en ce que** ledit promoteur d'adhérence est en solution dans la méthyléthylcétone ou bien en solution ou en dispersion dans une solution aqueuse.

## Claims

1. Use of an adhesion promoter (P) in an effective amount in a cleaning solution (C) for forming an adhesion promoter cleaning solution (CP), the said solution (CP) being intended to clean the surface of a substrate made of a (TPE-PA) material comprising at least one thermoplastic elastomer (TPE) and/or at least one polyamide (PA) and/or their blend(s) and to enhance the adhesion of the said surface to aqueous adhesive bonds, the said adhesion promoter (P) comprising at least one organic molecule comprising at least one isocyanate functional group masked by at least one masking agent, in which use the said adhesion promoter cleaning solution (CP) has a content of adhesion promoter (P) representing from 0.5 to 20% by weight of active material, with regard to the total weight of the cleaning solution (CP).

2. Use according to Claim 1, in which the said adhesion promoter cleaning solution (CP) has a content of adhesion promoter (P) representing from 0.5 to 2% by weight of active material, with regard to the total weight of the cleaning solution (CP).

3. Use according to Claim 1 or 2, in which the said adhesion promoter (P) comprises at least one of the following organic molecules: 4,4'-diphenylmethane diisocyanate (MDI), 1,6-hexamethylene diisocyanate (HDI), isophorone diisocyanate (IPDI) and toluene diisocyanate (TDI), and/or their mixtures.

4. Use according to many one of the preceding claims, in which the said adhesion promoter (P) comprises at least one aromatic isocyanate, preferably of TDI type.

5. Use according to any one of the preceding claims, in which the said at least one masking agent is chosen from diethyl malonate (DME), 3,5-dimethylpyrazole (DMP), methyl ethyl ketoxime (MEKO), caprolactam (ε-CAP) and/or their mixtures.

6. Use according to any one of the preceding claims, in which the said at least one masking agent is 3,5-dimethylpyrazole (DMP).

7. Use according to any one of the preceding claims, in which the cleaning using the said adhesion promoter cleaning solution (CP) is carried out via one or more of the following methods:
- by direct application with a brush or rag,
- by spraying,
- by dripping.

8. Use according to any one of the preceding claims, in which the said material comprises at least one TPE chosen from COPEs and/or TPUs and/or PEBAs and/or their blend.

9. Use according to any one of the preceding claims, in which the said material is the material of at least one first substrate (S1) and of a second substrate (S2) adhering to one another by means of an aqueous adhesive bond to form a laminate.

10. Use according to Claim 9, in which the material of the substrate S1 and the material of the substrate S2 are of the same nature.

11. Use according to Claim 9, in which the material of the substrate S1 and the material of the substrate S2 are different in nature, S2 being chosen from TPEs, homopolymers and copolymers, such as polyolefins, polyamines, polyesters, polyethers, polyesterethers, polyimides, polycarbonates, phenolic resins, crosslinked or noncrosslinked polyurethanes, in particular in the foam form, poly(ethylene/vinyl acetate)s, natural or synthetic elastomers, such as polybutadienes, polyisoprenes, styrene/butadiene/styrenes (SBSs), styrene/butadiene/acrylonitriles (SBNs), polyacrylonitriles, natural or synthetic fabrics, in particular fabrics made of organic polymer fibres, such as fabrics made of polypropylene, polyethylene, polyester, polyvinyl alcohol, polyvinyl acetate, polyvinyl chloride or polyamide fibres, fabrics made of glass fibres or of carbon fibres, and materials such as leather, paper and board.

12. Use according to one of Claims 9 to 11, in which the said aqueous adhesive bond comprises at least one layer of aqueous primer and/or at least one layer of aqueous adhesive.

13. Use according to Claim 12, in which the said adhesive and/or the said primer are of two-component nature:
- a first component comprising a functionalized or nonfunctionalized resin in solution in water or in dispersion in water, and
- a second component comprising a crosslinking agent, such as an isocyanate, which is pure or in solution in a solvent or in dispersion in water.

14. Use according to Claim 13, in which the said second component comprises a masked isocyanate.

15. Method for assembling, by adhesive bonding, two substrates S1 and S2 by means of an aqueous adhesive bond, at least one of the said two substrates being made of (TPE-PA) material comprising at least one thermoplastic elastomer TPE and/or at least one polyamide PA, the said method comprising the stages:
(a) of cleaning the surface of the (TPE-PA) substrate(s) with a cleaning solution comprising a promoter in accordance with that defined in any one of Claims 1 to 6;
(b) of application of an aqueous adhesive bond to a surface of at least one of the two substrates;
(c) of placing side by side the surface comprising the aqueous adhesive bond (J) of one of the substrates and a surface of the other substrates in order to form a combination comprising the two substrates with the aqueous adhesive bond between them;
(d) of compressing the combination and, after removing from the press;
(e) of recovery of the combination in the form of a laminated product.

16. Laminated product, in particular footwear sole, comprising a first substrate (S1) and a second substrate (S2) adhering to one another by means of an aqueous adhesive bond (J), the surface of at least one of the first and of the second substrate comprising at least one adhesion promoter in accordance with that defined in any one of Claims 1 to 6.

17. Adhesion promoter cleaning solution (CP) intended to clean the surface of substrate(s) made of (TPE-PA) material comprising at least one thermoplastic elastomer (TPE) and/or at least one polyamide (PA) and/or their blend(s), the said solution comprising an adhesion promoter (P) in accordance with that defined in any one of Claims 1 to 6 in order to increase the adhesion of the said surface to aqueous adhesive bonds, the content of adhesion promoter (P) representing form 0.5 to 20% by weight of active material, with regard to the total weight of the cleaning solution (CP).

18. Cleaning solution according to Claim 17, **characterized in that** the said adhesion promoter is in solution in methyl ethyl ketone or else in solution or in dispersion in an aqueous solution.

## Patentansprüche

1. Verwendung eines Haftvermittlers (V) in einer wirksamen Menge in einer Reinigungslösung (R) zur Bildung einer Haftvermittler-Reinigungslösung (RV), wobei die Lösung (RV) dazu vorgesehen ist, die Oberfläche eines Substrats aus einem Material (TPE-PA), das mindestens ein thermoplastisches Elastormer (TPE) und/oder mindestens ein Polyamid (PA) und/oder deren Gemisch(e) aufweist, zu reinigen und die Haftung dieser Oberfläche an wässrigen Verklebungen zu verbessern, wobei der Haftvermittler (V) zumindest ein organisches Molekül enthält, welches mindestens eine mit mindestens einem Blockierungsmittel blockierte Isocyanatfunktion umfasst, wobei die Haftvermittler-Reinigungslösung (RV) einen Mengenanteil des Haftvermittlers (V) aufweist, der 0,5 bis 20 Gew.-% wirksame Substanz, bezogen auf das Gesamtgewicht der Reinigungslösung (RV), ausmacht.

2. Verwendung nach Anspruch 1, wobei die Haftvermittler-Reinigungslösung (RV) einen Mengenanteil des Haftvermittlers (V) enthält, der 0,5 bis 2 Gew.-% wirksame Substanz, bezogen auf das Gesamtgewicht der Reinigungslösung (RV) ausmacht.

3. Verwendung nach Anspruch 1 oder 2, wobei der Haftvermittler (V) zumindest eines der folgenden organischen Moleküle umfasst: 4,4'-Diphenylmethandiisocyanat (MDI), 1,6-Hexamethylendiisocyanat (HDI), Isophorondiisocyant (IPDI) und Toluoldiisocyanat (TDI) und/oder deren Gemische.

4. Verwendung nach einem der vorhergehenden Ansprüche, wobei der Haftvermittler (V) zumindest ein aromatisches Isocyanat, vorzugsweise vom Typ HDI, umfasst.

5. Verwendung nach einem der vorhergehenden Ansprüche, wobei das zumindest eine Blockierungsmittel unter Diethylmalonat (DME), 3,5-Dimethylpyrazol (DMP), Methylethylketoxim (MEKO), Caprolactam (e-CAP) und/oder deren Gemischen aufgewählt ist.

6. Verwendung nach einem der vorhergehenden Ansprüche, wobei es sich bei dem zumindest einen Blockierungsmittel um das 3,5-Dimethylpyrazol (DMP) handelt.

7. Verwendung nach einem der vorhergehenden Ansprüche, wobei die Reinigung mit Hilfe der Haftvermittler-Reinigungslösung (RV) nach einem oder mehreren der folgenden Verfahren durchgeführt wird:
- direktes Aufbringen mit dem Pinsel oder einem Tuch,
- Aufsprühen,
- Eintauchen.

8. Verwendung nach einem der vorhergehenden Ansprüche, wobei das Material zumindest ein TPE umfasst, das unter den COPE und/oder den TPU und/oder den PEBA und/oder deren Gemischen ausgewählt ist.

9. Verwendung nach einem der vorhergehenden Ansprüche, wobei das Material das Material mindestens eines ersten Substrats (S1) und eines zweiten Substrats (S2) ist, die zur Bildung eines Schichtstoffes mittels einer wässrigen Verklebung aneinander haften.

10. Verwendung nach Anspruch 9, wobei das Material des Substrats S1 und das Material des Substrats S2 von der gleichen Art sind.

11. Verwendung nach Anspruch 9, wobei das Material des Substrats S1 und das Material des Substrats S2 unterschiedlicher Natur sind, wobei S2 ausgewählt ist unter: den TPE, Homopolymeren und Copolymeren, wie Polyolefinen, Polyaminen, Polyestern, Polyethern, Polyesterethern, Polyimiden, Polycarbonaten, Phenolharzen, Polyurethanen, die vernetzt oder nicht vernetzt sind, insbesondere in Form von Schaum, Poly(ethylenvinylacetat), natürlichen oder synthetischen Elastomeren, wie Polybutadienen, Polyisoprenen, Styrol-Butadien-Styrol (SBS), Styrol-Butadien-Acrylonitril (SBN), Polyacrylnitrilen; natürlichen oder synthetischen Geweben, insbesondere Geweben aus Fasern organischer Polymere, wie beispielsweise Geweben aus Polypropylenfasern, Polyethylenfasern, Polyesterfasern, Polyvinylalkoholfasern, Polyvinylacetatfasern, Polyvinylchloridfasern, Polyamidfasern; Geweben aus Glasfasern oder aus Kohlenstofffasern, sowie Materialien wie Leder, Papier und Karton.

12. Verwendung nach einem der Ansprüche 9 bis 11, wobei die wässrige Verklebung zumindest eine wässrige Primerschicht und/oder zumindest eine wässrige Klebstoffschicht aufweist.

13. Verwendung nach Anspruch 12, wobei der Klebstoff und/ oder der Primer aus zwei Komponenten bestehen:
- einer ersten Komponente, die ein funktionalisiertes oder nicht funktionalisiertes Harz gelöst in Wasser oder als Dispersion in Wasser enthält, und
- eine zweite Komponente, die ein Vernetzungsmittel, beispielsweise ein Isocyanat, in reiner Form oder gelöst in einem Lösungsmittel oder als Dispersion in Wasser enthält.

14. Verwendung nach Anspruch 13, wobei die zweite Komponente ein blockiertes Isocyanat umfasst.

15. Verfahren zum Zusammenfügen zweier Substrate S 1 und S2 durch Kleben mittels einer wässrigen Verklebung, wobei zumindest eines der beiden Substrate aus einem Material (TPE-PA) gebildet ist, das zumindest ein thermoplastisches Elastomer TPE und/oder zumindest ein Polyamid PA aufweist, wobei das Verfahren die folgenden Schritte umfasst:
(a) Reinigen der Oberfläche des/der Substrats/Substrate (TPE-PA) mit einer wie in einem der Ansprüche 1 bis 6 definierten, einen Haftvermittler enthaltenden Reinigungslösung,
(b) Aufbringen einer wässrigen Verklebung auf eine Oberfläche zumindest eines der beiden Substrate,
(c) Anlegen der Oberfläche eines der Substrate, die die wässrige Verklebung (K) aufweist, an eine Oberfläche des anderen Substrats, zur Bildung einer Einheit, die die beiden Substrate und dazwischen die wässrige Verklebung aufweist;
(d) Pressen der Einheit und nach dem Abheben der Presse
(e) Gewinnen der Einheit in Form eines Schichtstoffes.

16. Schichtstoff, insbesondere Schuhsohle, der ein erstes Substrat (S1) und ein zweites Substrat (S2) aufweist, die mittels einer wässrigen Verklebung (K) aneinander haften, wobei die Oberfläche des ersten und/oder zweiten Substrats zumindest einen wie in einem der Ansprüche 1 bis 6 definierten Haftvermittler aufweist.

17. Haftvermittler-Reinigungslösung (RV), die zur Reinigung der Oberfläche von Substrat(en) aus einem Material (TPE-PA) vorgesehen ist, welches zumindest ein thermoplastisches Elastomer (TPE) und/oder zumindest ein Polyamid (PA) und/oder deren Gemisch(e) enthält, wobei die Lösung einen Haftvermittler (V) nach einem der Ansprüche 1 bis 6 enthält, um die Haftung der Oberfläche an wässrigen Verklebungen zu verbessern, wobei der Mengenanteil des Haftvermittlers (V) 0,5 bis 20 Gew.-% wirksame Substanz, bezogen auf das Gesamtgewicht der Reinigungslösung (RV), aufmacht.

18. Reinigungslösung nach Anspruch 17, **dadurch gekennzeichnet, dass** der Haftvermittler in Methyethylketon gelöst ist oder in einer wässrigen Lösung gelöst oder dispergiert ist.
